Europäisches Patentamt

European Patent Office

Office européen des brevets

(11) Publication number: **0 140 671**
**A2**

(12) # EUROPEAN PATENT APPLICATION

(21) Application number: **84307271.1**

(22) Date of filing: **22.10.84**

(51) Int. Cl.⁴: **F 16 D 65/16**

(30) Priority: **21.10.83 JP 163864/83**

(43) Date of publication of application: **08.05.85**
**Bulletin 85/19**

(84) Designated Contracting States: **DE FR GB IT**

(71) Applicant: **SUMITOMO ELECTRIC INDUSTRIES LIMITED, No. 15, Kitahama 5-chome Higashi-ku, Osaka-shi Osaka-fu (JP)**

(72) Inventor: **Tsurusaki, Akito Itami Works, Sumitomo Electric Ind. Ltd. 1-1 Koyakita 1-chome, Itami-Shi Hyogo-ken (JP)**
Inventor: **Noguchi, Takeshi Itami Works, Sumitomo Electric Ind. Ltd 1-1 Koyakita 1-chome, Itami-shi Hyogo-ken (JP)**

(74) Representative: **Rackham, Stephen Neil et al, GILL JENNINGS & EVERY 53-64 Chancery Lane, London WC2A 1HN (GB)**

(54) Hydraulic disc brake with a parking brake mechanism.

(57) An improved hydraulic disc brake with a parking brake mechanism attached thereto is disclosed which comprises a piston for actuating brake pads, the piston being formed with a conical clutching surface on the inner wall thereof, a first member (sleeve) adapted to come in tight contact with the clutching surface of the piston, a second member (push rod) threadably engaged to the first member, an actuating lever operatively connected to the second member by way of an actuating mechanism and a parking brake lever operatively connected to the actuating lever with the aid of a cable extending therebetween. To inhibit increase of working stroke of the actuating lever by preventing rotation of the sleeve during actuation of the parking brake lever the piston or the sleeve is formed with means for decreasing contact area to increase contact pressure (such as a plurality of grooves) on the conical clutching surface thereof.

# HYDRAULIC DISC BRAKE WITH A PARKING
## BRAKE MECHANISM

The present invention relates to a hydraulic disc brake with a parking brake mechanism attached thereto and more particularly to improvement of or relating to force transmission section operable by actuating a parking brake in the hydraulic disc brake with a parking brake mechanism incorporated therein.

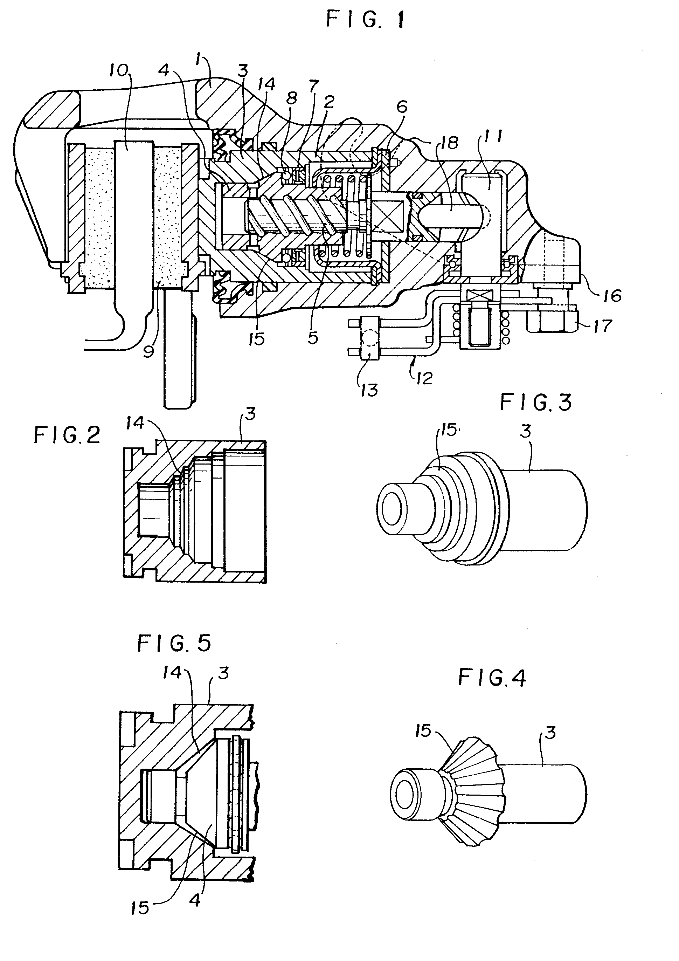

A disc brake with a parking brake mechanism incorporated therein that is called built-in type disc brake with a parking brake mechanism incorporated therein is hitherto known. A typical conventional disc brake of the above-mentioned type is as illustrated in Fig. 1 and includes an actuating lever 12 which is operatively connected to a parking brake lever (not shown) by way of force transmission cable. As the actuating lever is caused to turn, the pad thrusting piston is displaced toward the brake disc by means of a combination of actuating mechanism such as cam shaft 11 or the like means, push rod 5 and sleeve 4 whereby braking force is generated.

The push rod 5 and the sleeve 4 are formed with a plurality of threads and thereby they are threadably engaged to one another. As the pad wear, resulting in increased clearance between the brake disc and the pads, the piston 3 is displaced further. This causes the sleeve 4 to be rotated and thereby the position of the sleeve relative to the push rod is offset from the foregoing one. Thus, increased clearance due to wearing is reduced and an occurrance of gradual increase of clearance due to wearing can be inhibited. As a result, the disc brake of the above-mentioned type functions to compensate for wearing of pads.

It should be noted that the push rod and the sleeve should not be rotated when force is transmitted from the push rod 5 to the sleeve 4 via the multi-thread portion and it is further transmitted from the sleeve to the piston as the parking brake lever is actuated. For the reason the push rod is held slidable but not rotatable in the disc brake cylinder 2 with the aid of a key plate 6.  Since the
sleeve is brought in frictional contact with the clutching
surface 14 of the piston which has been engaged unrotatably
to the pad and resistive rotational force due to frictional
force on the clutching surface is determined larger than
rotational force of the sleeve which is generated by means
of multi-threads having a long pitch during transmittion of
force as mentioned above, it results that force is transmitted from the push rod to the piston without occurrence of
rotation of the sleeve.  If the sleeve 4 is rotated during
transmission of force, the position of the sleeve 4 relative
to the push rod 4 is caused to change, resulting in increased working stroke of the parking brake lever when the latter
is actuated.  This is not desirable for satisfactory function of the parking brake.

In case when the above-described mechanism adapted to
inhibit rotational force of the sleeve during actuation of
the parking brake by the existence of frictional force on the
engagement surface (clutching surface) of the piston fails
to function properly because of remarkably reduced friction
coefficient on the clutching surface and the multi-thread
engagement surface between the sleeve and the push rod,
rotational force of the sleeve increases but frictional
force on the clutching surface decreases, resulting in
occurrence of rotation of the sleeve.  Thus, there is fear
of causing increase in working stroke of the parking brake
lever.

The cylinder 2 is filled with hydraulic fluid and
viscosity of the latter increases when its temperature is
lowered remarkably.  In this case there is seen such a
tendency that a layer of oil film is produced in the area
as defined between metallic components in the multi-thread
engagement section and those on the clutching surfaces,
the layer of oil film having a thickness which becomes
thicker as temperature is lowered, whereby friction coefficient decreases.  Therefore, there is fear of causing
increase in working length of the parking brake lever
because of occurrence of rotation of the sleeve 4 under the very cold atmosphere.

It has been confirmed that decreased contact area between the conical clutching surface 14 on the inner wall of the piston 3 and the conical clutching surface 15 on the sleever 4 and thereby increased contact pressure therebetween at a time when force is transmitted are very effective for resolving the above-mentioned problem.

To embody the structure as described above there is proposed arrangement of a plurality of coaxial annular grooves, spirally extending grooves or longitudinally extending grooves (grooves extending along the inclined configuration of the conical clutching surface) on the conical clutching surface 14 on the inner wall of the piston 3 (see Fig. 2). It should be noted that the present invention should not be limited only to plural grooves. Alternatively, a single groove may be employable.

Grooves may be formed on the sleeve 4 instead of the piston 3. Otherwise, grooves may be formed on both the piston and the sleeve. In the last-mentioned case the configuration of grooves on the sleeve may be different from that of grooves on the piston. In case of no grooves formed thereon conical angle of the clutching surface on the sleeve may be different from that of the clutching surface on the piston in order that local coaxial circular contact is established between them at their outer or inner peripheral area (see Fig. 5).

Thus, there is proposed in accordance with the present invention a hydraulic disc brake with a parking brake mechanism attached thereto of the type including a piston for actuating brake pads, the piston being formed with a conical clutching surface of the inner wall thereof, a first member (sleeve) adapted to come in tight contact with the clutching surface of the piston, a second member (push rod) threadably engaged to the first member, an actuating lever operatively connected to the second member by way of an actuating mechanism and a parking brake lever operatively connected to the actuating lever with the aid of a cable extending therebetween, characterized in that the piston or the sleeve is formed with means for decreasing contact area to increase contact pressure (such as a plurality of grooves) on the conical clutching surface thereof.

Since the hydraulic disc brake of the invention assures that rotation of the sleeve is inhibited and increase in working stroke of the actuating lever is prevented during actuation of the parking brake lever, stable maneuverability of the parking brake lever is obtainable. Particularly, the hydraulic disc brake of the invention exhibits excellent performance at a lower temperature.

The accompanying drawings will be briefly described below.

Fig. 1 is a sectional view of a conventional hydraulic disc brake with a parking brake mechanism attached thereto.

Fig. 2 is a sectional view of a piston with a plurality of annular grooves formed thereon in accordance with an embodiment of the invention.

Fig. 3 is a perspective view of a sleeve with a plurality of coaxial annular groove formed thereon.

Fig. 4 is a perspective view of a sleeve with a plurality of longitudinally extending grooves formed thereon, and

Fig. 5 is a sectional view of a combination of piston and sleeve, wherein the conical angle on the clutching surface on the former is determined different from that on the latter.

Now, the inner structure and operation of a disc brake according to the invention will be described with reference to Fig. 1. A piston 3 is incorporated in the cylinder 2 which is bored in the caliper 1. Further, a sleeve 4 and a push rod 5 are incorporated in the piston 3. The push rod 5 is held slidable but not rotatable relative to the caliper 1 with the aid of a key plate 6. Between the sleeve 4 and the piston 3 are disposed a spring 7 and a thrust bearing 8 whereby the clutching surface of the sleeve 4 is brought in pressure contact with that of the piston 3 under the effect of resilient force of the spring 7. During normal operation of the hydraulic disc brake the piston is loaded with hydraulic pressure and thereby braking force is generaged by allowing the pad 9 to abut against the brake disc 10. As the pad wears increasingly, a pad wearing compensation mechanism which will be described below functions to inhibit the clearance between the pad and the disc from fluctuating. Thus, a so-called floating type disc brake with the pad wearing compensation mechanism incorporated therein is constituted in that way.

The push rod 5 is adapted to move by means of a combination of cam shaft 11 and slat 18 and an actuating lever 12 is operatively connected to the one end of the cam shaft 11. The actuating lever 12 is formed with a slit at the one end part thereof so that a force transmission cable 13 to be actuated by parking lever is firmly engaged to the slit of the actuating lever 12. Further, a bracket 16 for supporting the cable (serving also as a guide) is fixedly secured to the caliper 1 at the position located in the proximity of the turning point of the actuating lever 12 with the aid of a bolt 17. The piston 3 is formed with a recess on the pad thrusting surface of the piston 3 at the lefthand end thereof as seen in the drawing so as to hold the piston unrotatable relative to the pad by allowing a projection on the back-ring of the pad to be engaged to the recess.

As the actuating lever 12 is turned about the cam shaft 11 by means of the cable which is operated with a parking brake lever and the slat 18, the push rod 5, the sleeve 4 and the piston 3 are operated one after another with the aid of the cam mechanism, the brake disc 10 is tightly clamped between the pads 9 whereby braking force is generated. At this moment it is necessary that the sleeve is held unrotatable under the effect of frictional resistance existent on the clutching surface but there is fear of causing such a malfunction that the sleeve is rotated due to reduced friction coefficient on the clutching surface attributable to increased viscosity of hydraulic fluid at a lower temperature.

Thus, the present invention has been made with the foregoing malfuction in mind. Specifically, the present invention consists in that the piston 3 or the sleeve 4 is formed with a plurality of grooves on the clutching surface thereof in the above-described manner so as to assure increased contact surface pressure, prevention of reduction in friction coefficient and inhibition of the sleeve from being rotated at a lower temperature. The present invention should not be limited only to this. Alternatively, the conical angle of the clutching surface on the piston may be different from that on the sleeve so as to allow them to come in contact with each other in the area having a reduced width at the outer or inner peripheral part thereof. In this case it is preferable that they contact each other at the outer peripheral part.

Claims:

1.    A hydraulic disc brake with a parking brake mechanism attached thereto of the type including a piston for actuating brake pads, said piston being formed with a conical clutching surface on the inner wall thereof, a first member (sleeve) adapted to come in tight contact with said clutching surface of the piston, a second member (push rod) threadably engaged to said first member, an actuating lever operatively connected to said second member by way of an actuating mechanism and a parking brake lever operatively connected to said actuating lever with the aid of a cable extending therebetween, characterized in that the piston or the sleeve is formed with means for decreasing contact area to increase contact pressure (such as a plurality of grooves) on the conical clutching surface thereof.

2.    A hydraulic disc brake with a parking brake mechanism attached thereto as defined in Claim 1, characterized in that said means comprise a plurality of annular grooves which are arranged in the coaxial relation.

3.    A hydraulic disc brake with a parking brake mechanism attached thereto as defined in Claim 1, characterized in that said means comprise a plurality of spirally extending grooves.

4.    A hydraulic disc brake with a parking brake mechanism attached thereto as defined in Claim 1, characterized in that said means comprise a plurality of longitudinally extending grooves (grooves extending in the direction of inclination of the conical surface).

5.    A hydraulic disc brake with a parking brake mechanism attached thereto as defined in Claim 1, characterized in that one of the conical clutching surfaces on the piston and the sleeve includes a plurality of coaxial annular grooves or spirally extending grooves and the other one does a plurality of longitudinally extending grooves.

6.    A hydraulic disc brake with a parking brake mechanism attached thereto as defined in Claim 1, characterized in that the conical angle of the piston is determined less than that of the sleeve in such a manner that the piston and the sleeve come in contact with one another at the outermost peripheral part of their conical clutching surfaces without any groove formed thereon.

7.    A hydraulic disc brake with a parking brake mechanism attached thereto as defined in Claim 1, characterized in that the piston or the sleeve is formed with a plurality of coaxial annular grooves or spirally extending grooves and, in addition, with a plurality of longitudinally extending grooves.

0140671

FIG. 1

FIG.2

FIG.3

FIG. 5

FIG.4